(19) Europäisches Patentamt
European Patent Office
Office européen des brevets

(11) **EP 4 779 008 A1**

(12) **EUROPEAN PATENT APPLICATION**

(43) Date of publication:
**22.07.2026 Bulletin 2026/30**

(21) Application number: **25181586.6**

(22) Date of filing: **09.06.2025**

(51) International Patent Classification (IPC):
*C12C 7/047* (2006.01)     *C12C 5/00* (2006.01)
*C12C 7/053* (2006.01)

(52) Cooperative Patent Classification (CPC):
**C12C 7/047; C12C 5/00; C12C 7/053**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.01.2025 GB 202500768**

(71) Applicant: **Toast Ale Ltd
London NW1 3BF (GB)**

(72) Inventors:
 • **Stuart, Tristram
  London, NW1 3BF (GB)**
 • **Wilson, Robert
  London, NW1 3BF (GB)**

 • **Robson, Stuart
  London, NW1 3BF (GB)**
 • **Cooke, David
  Nottingham, NG7 2RD (GB)**
 • **Calvert, Duncan
  Nottingham, NW1 3BF (GB)**

(74) Representative: **Hanson, Kevin
Panoramix Limited
19 Blenheim Avenue
Fernwood
Newark NG24 5AB (GB)**

Remarks:
 •Claims 16-25 are deemed to be abandoned due to
 non-payment of the claims fees (Rule 45(3) EPC).
 •Amended claims in accordance with Rule 137(2)
 EPC.

(54) **PROCESS FOR MANUFACTURING SYRUP FROM BREAD**

(57) The present disclosure provides a method for manufacturing an environmentally friendly syrup suitable for use in the production of fermented beverages and foods. The method comprises steeping solid ingredients in water to form a mixture comprising a liquid sugar solution, extracting the liquid sugar solution from the mixture, and concentrating the liquid sugar solution. The solid ingredients comprise malted cereal grains and at least 50 wt% bread. This method repurposes waste bread, reducing environmental impact and costs in beverage production. The resulting syrup has a high percentage of fermentable sugars and can be used as a companion syrup in brewing, offering a sustainable alternative to traditional brewing ingredients while maintaining desired fermentation characteristics.

FIG. 7

EP 4 779 008 A1

**Description**

FIELD OF INVENTION

The present disclosure relates to the field of food and beverage processing, and more particularly, to methods for manufacturing syrups from bread products for use in the production of fermented beverages.

BACKGROUND

Brewing is an ancient practice that has been integral to human civilization for thousands of years. It involves the fermentation of sugars derived from various sources, primarily cereal grains, to produce alcoholic beverages such as beer. The brewing process typically begins with malting, where cereal grains are allowed to partially germinate under controlled conditions. This process activates enzymes within the grains that convert starches into fermentable sugars.

Traditional brewing methods rely heavily on malted grains, particularly barley, as the primary source of fermentable sugars. The malting process, while effective, is both time and energy-intensive. It requires careful control of temperature and moisture levels, as well as significant space for spreading out the grains to ensure uniform germination. Furthermore, the malted grains must be dried and often stored for extended periods, which consumes additional energy and resources.

Bread is one of the most commonly wasted food items globally, with significant quantities discarded daily due to overproduction, spoilage, or failure to meet commercial standards. This waste represents not only a loss of valuable resources but also contributes to environmental concerns related to disposal.

An opportunity for utilizing bread waste as a source of carbohydrates in brewing exists but technical development is needed that overcomes one or more of these problems is required.

SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In a first aspect, a method for the manufacture of an environmentally friendly syrup suitable for use in the production of a fermented beverage is provided. The method includes steeping solid ingredients in water to form a mixture comprising liquid sugar solution, extracting the liquid sugar solution from the mixture, concentrating the liquid sugar solution, wherein the solid ingredients comprise malted cereal grains and at least 50 wt% bread.

This method allows for the efficient production of a fermentable syrup while repurposing waste bread, reducing the environmental impact of both bread waste and traditional syrup production processes.

The method may further comprise filtering the liquid sugar solution to remove one or more of: proteins, color, ionic components, or particulates according to a final specification.

Filtering the liquid sugar solution helps to refine the syrup, removing unwanted components and ensuring a consistent, high-quality product suitable for use in fermented beverages. This step is carried out before the extraction and concentration of the liquid sugar solution.

The solid ingredients may comprise at least 60 wt%, at least 70 wt%, at least 80 wt%, at least 90 wt%, or at least 95 wt% bread.

Increasing the proportion of bread in the solid ingredients allows for greater utilization of waste bread, further enhancing the environmental benefits of the method.

The solid ingredients may comprise at least 5 wt%, at least 10 wt%, at least 20 wt%, at least 30 wt%, at least 40 wt%, or at least 50 wt% malted or unmalted cereal grains.

Including a proportion of malted cereal grains provides enzymes and fermentable sugars that complement the bread content, optimizing the syrup production process.

The solid ingredients may further comprise rice hulls and/or an enzyme blend.

Adding rice hulls can improve filtration efficiency, while an enzyme blend can enhance the conversion of starches to fermentable sugars, improving overall syrup yield and quality.

The enzyme blend may comprise a first enzyme group, a second enzyme group, a third enzyme group, and a fourth enzyme group, wherein the first enzyme group comprises pullulanase, $\alpha$-amylase, cellulase, xylanase, protease, lipase, the second enzyme group comprises amyloglucosidase, the third enzyme group comprises xylanase and $\beta$-glucanase, and the fourth enzyme group comprises protease.

This specific enzyme blend composition allows for efficient breakdown of various components in the bread and malted grains, optimizing the conversion of starches and other complex molecules into fermentable sugars.

The enzyme blend may comprise 50% of the first group, 30% of the second group, 10% of the third group, and 10% of the fourth group.

This particular ratio of enzyme groups has been found to provide an optimal balance for converting the bread and malted grain mixture into fermentable sugars.

The enzyme blend dose may be between 3.0 and 4.5 ml/kg dry matter, 3.5 and 4.0 ml/kg dry matter, or 3.7 and 3.8 ml/kg dry matter.

These dosage ranges ensure efficient enzymatic activity without excessive enzyme use, optimizing the cost-effectiveness of the syrup production process.

In a second aspect, a syrup prepared according to the method of the first aspect is provided, wherein sugars of the syrup comprise at least 70 wt%, at least 75 wt%, at least 80 wt%, at least 85 wt%, or up to 100 wt% of fermentable sugars. The second aspect incorporates the disclosure of the first aspect.

This high proportion of fermentable sugars in the syrup ensures its suitability for use in the production of fermented beverages, particularly beer.

The fermentable sugars may comprise monosaccharides, disaccharides and/or trisaccharides, wherein the monosaccharides comprise fructose and/or glucose, the disaccharides comprise sucrose and/or maltose, and the trisaccharides comprise maltotriose.

This specific sugar profile provides an ideal mixture for fermentation, closely mimicking the sugar composition found in traditional brewing worts.

The syrup may be used as a Companion (RTM) syrup in the manufacture of fermented beverages, and the Companion (RTM) syrup used may beup to 100 wt% of the total fermentable content used in the manufacture of the beverage.

Using the syrup as a companion syrup allows for flexibility in brewing recipes, enabling brewers to incorporate the environmental benefits of the bread-based syrup while maintaining desired flavor profiles and fermentation characteristics.

In a third aspect, a beer manufactured using the syrup according to the second aspect is provided. The third aspect incorporates the disclosure of the first and second aspects. This aspect demonstrates the practical application of the environmentally friendly syrup in the production of a widely consumed fermented beverage, showcasing the potential for reducing waste and environmental impact in the brewing industry.

The foregoing general description of the illustrative embodiments and the following detailed description thereof are merely exemplary aspects of the teachings of this disclosure and are not restrictive.

BRIEF DESCRIPTION OF FIGURES

Non-limiting and non-exhaustive examples are described with reference to the following figures. The above and other objects and advantages of the disclosure will be apparent upon consideration of the following detailed description, taken in conjunction with the accompanying drawings, which:

FIG. 1 illustrates a film evaporation system for concentrating wort into syrup, in accordance with some examples of the present disclosure.

FIG. 2 depicts a side view of a mash vessel for processing raw materials into a liquid mixture, according to aspects of the present disclosure.

FIG. 3 shows a kettle system with an external wort boiler, in accordance with some examples of the present disclosure.

FIG. 4 presents an orthogonal view of a mash filter apparatus, according to aspects of the present disclosure.

FIG. 5 illustrates a system diagram of a six roller mill apparatus, in accordance with some examples of the present disclosure.

FIG. 6 depicts a process schematic for manufacturing syrup from bread and malt, according to aspects of the present disclosure.

FIG. 7 shows a flowchart of a method for manufacturing syrup suitable for fermented beverage production, in accordance with some examples of the present disclosure.

DETAILED DESCRIPTION

The following description sets forth exemplary aspects of the present disclosure. It should be recognised, however, that such a description is not intended as a limitation on the scope of the present disclosure. Rather, the description also encompasses combinations and modifications to those exemplary aspects described herein.

In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

It should be appreciated that in the above description of exemplary embodiments, various features are sometimes grouped together in a single embodiment, figure, or description thereof for the purpose of streamlining the disclosure and aiding in the understanding of or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

While some embodiments described herein include some, but not other features included in other embodiments, combinations of features of different embodiments are meant to be within the scope of the disclosure, and form different embodiments, as would be understood by the skilled person. For example, in the following claims, any of the claimed embodiments can be used in any combination.

Thus, while certain embodiments have been described, it will be appreciated that other and further modifications may be made thereto without departing from the spirit of the disclosure, and it is intended to cover all such modifications, enhancements, and other implementations, which fall within the true spirit and scope of this disclosure. To the maximum extent permitted by law, the scope of this disclosure is to be determined by the broadest permissible interpretation of the following claims and shall not be restricted or limited by the foregoing detailed description.

While various implementations of the disclosure have been described, it will be readily apparent to the skilled person that many more implementations are possible within the scope of the disclosure.

The present disclosure provides a process for the manufacture of an environmentally friendly syrup suitable for use in the production of fermented beverages. In some examples, the process involves a mashing step, where solid ingredients are steeped in water to form a mixture comprising liquid sugar solution, and a wort extraction step, where the liquid wort is extracted from the mixture. The solid ingredients may comprise malted cereal grains and a significant proportion of bread, potentially at least 50 wt%.

Mashing is the term given to the start of the brewing process, during which milled malted grains (the "grist") are mixed with water to form a porridge like mixture called the "mash." It is in the mash that starches in the grains are broken down by enzymes present in the grain into both complex and simple sugars, creating the sweet fermentable liquid called the "wort". The wort is separated from the solids, which are discarded or repurposed.

By removing excess water, wort can be reduced down to form a syrup. A syrup is a highly viscous liquid comprising a high concentration of dissolved sugars in water, but showing little tendency to deposit crystals.

The solid ingredients in the mashing step may comprise at least 20 wt%, at least 30 wt%, at least 40 wt%, at least 50 wt%, at least 60 wt%, at least 70 wt%, at least 80 wt%, at least 90 wt%, or at least 95 wt% bread. Optionally, the solid ingredients in the mashing step may comprise at least 70 wt% bread. This high proportion of bread in the ingredient mix further enhances the environmental benefits of the process by maximizing the use of waste bread.

The solid ingredients in the mashing step further comprise malted or unmalted cereal grains. The solid ingredients in the mashing step may comprise least 5 wt%, at least 10 wt%, at least 20 wt%, at least 30 wt%, at least 40 wt%, or at least 50 wt% malted or unmalted cereal grains. Optionally, the solid ingredients in the mashing step may comprise no malted or unmalted cereal grains.

The malted cereal grains may be any suitable grains, such as malted barley, malted wheat, malted maize, malted rice, and/or malted oats. Optionally, malted barley grains may be used. Malted barley is an advantageous choice as it contains particularly high levels of enzymes for converting starch into simple sugars.

The solid ingredients may further comprise at least one or more additional ingredients. For example, rice hulls may be used in the mash. The choice of the other ingredients may be made to influences the viscosity of the mash and wort filterability.

The ratio of water to solid ingredients in the mashing step is between 1:1 and 10:1, between 1.5:1 and 9:1, between 2:1 and 8:1, between 2.5:1 and 7:1, between 3:1 and 6.5:1, or optionally between 3.5:1 and 6:1. The amount of water required will depend on the quantity of bread and malted grains. Sufficient water is required so that the bread and malted grains can form the porridge like mash, and so that there is sufficient contact between the enzymes and starch to form the fermentable sugars. If there is too much water, it may be difficult to remove later and there may be a loss in enzyme activity efficiency.

The water may be initially heated during the mashing step to about 40°C, and then heated up to about 80°C, over a time period of about 30 to 180 minutes. It has also been found, however, that a reduced temperature range of an initial temperature of about 50°C and then heated up to about 80°C over a time period of about 60 minutes. In some circumstances, the range can be reduced further to an initial temperature of about 60°C and then heated up to about 76°C over a similar time period of 60 minutes.

Heating the water may speed up the enzymatic action. The chosen temperature will be dependent on the particular enzymes present in the mashing step.

The malted grain may contain natural enzymes which are capable of breaking down the starch, protein, and fibre present in bread. Depending on the quantity of malted grain and bread in the mashing step, it may be advantageous to add one or more enzymes to the mashing step, which are capable of converting the bread to sugars. These enzymes may be in addition to the enzymes naturally present in the malted grain.

The one or more enzymes added to the mashing step may be any appropriate enzymes capable of breaking down the starch, protein, and fibre present in bread. For example, the enzymes may comprise amylases (such as alpha amylase), proteases, glucanases (such as beta glucanases), and/or xylanases. The enzymes may be any suitable commercially available mixture of enzymes, for example, trizyme, Laminex, glucanase, or amyloglucosidase.

The pH of the mixture in the mashing step may be between 4 and 6.5. Enzyme activity is affected by pH. Particular enzymes have an optimum pH at which they work best, but they also have a working range of pH values. The pH of the mixture may be optimized to best suit the activity of the enzyme or mixture of enzymes present in the mashing step.

The bread may comprise bread that has been milled to give a crumb consistency, optionally wherein the crumb has mean diameter of about 1mm, about 2mm or about 3mm. Optionally, the bread may be milled to give a fine, flour-like consistency, with particles having a mean diameter of less than 1mm.

Milling the bread to a crumb consistency increases the surface area of the bread, allowing it to mix well in water to form the mash, and to achieve a more efficient enzyme activity on the starch during the mashing step.

The bread used in the mashing step may have a water content between 1 wt% and 40 wt%, between 10 wt% and 30 wt%, 10 wt% and 20 wt%, or 10 wt% to 15 wt%. The bread may be dried to achieve a water content of less than 10 wt% water. The bread is dried largely as a shelf life parameter for the crumb to prevent mould growth in storage. However, it should be noted that higher water content does reduce the overall wort strength and that additional water content will need to be removed during the concentration of the wort to syrup. Accordingly, it is preferable to reduce the water content for storage, and to prevent an additional water extraction process later. The bread may be dried by any suitable method, such as air drying, kiln drying or infrared balance drying. Removing moisture from the bread by drying is advantageous as it decreases the chance of mold growth, and increases the shelf life of the bread.

Advantageously, the bread may comprise waste bread. Waste bread contains starch, proteins and nutrients that may be suitable for fermentation processes. Waste bread may be any bread which cannot be sold, such as bread which is under or overcooked or is deformed, or bread which is stale or spoiled in some way (but is otherwise still suitable for human consumption). By using waste bread, a resource which otherwise would be disposed of can be usefully repurposed and recycled.

The bread may comprise toasted bread. Toasting the bread can change the flavour of the bread, and create a desirable flavour profile in the syrup manufactured in the mashing step.

The bread may comprise stale bread. Stale bread may include any bread which is about 1 week old. Bread which has gone stale and cannot be sold can also be usefully recycled in the manufacture of the syrup.

The bread may be any bread, which comprises starch, proteins and nutrients that are suitable for fermentation processes. For example, the bread may comprise bread selected from white bread, malted bread and/or brown bread. The bread may be commercially manufactured.

Bread is usually made from a wheat flour dough that is cultured with yeast, allowed to rise, and baked in an oven. Common wheat is the most common grain used for the preparation of bread owing to its high levels of gluten, which give the dough sponginess and elasticity. Bread may also be made from the flour of other wheat species (including spelt, emmer, einkorn and kamut). Non-wheat cereals including rye, barley, maize (corn), oats, sorghum, millet and rice have been used to make bread, but, with the exception of rye, usually in combination with wheat flour as they have less gluten.

The liquid wort, also referred to as a liquid sugar solution herein, may be heated to remove excess water, and may be heated (e.g., boiled) in order to stabilize it chemically and to ensure it is a sterile microbial liquid. At this stage, around 4-6% volume is lost but it remains a liquid, and has not yet been made into a syrup. This liquid wort is heated for between 30 to 180 minutes, and optionally for between 45 and 60 minutes.

Further concentration of the liquid sugar solution creates the syrup. The syrup may be further concentrated to comprise 20-30 wt% water, in order to reduce its volume and weight, in order to reduce packaging and transportation costs. Syrup at around 70-80 wt% solids is a reasonable amount higher concentrates have an increased viscosity that would make the material handling very difficult in a brewery due to the increased energy required to heat up the syrup to allow it to flow better. However, it should be considered that syrup with a water wt% less than 20 wt% and higher than 30 wt% are considered to be within the scope of this disclosure.

In some examples, the process may include a filtration step to further refine the liquid sugar solution. This filtration step may be implemented at various stages of the process, such as after the initial wort extraction or following the concentration step.

The filtration process may involve multiple stages, each designed to remove specific components from the liquid. In some implementations, a coarse filtration may be performed initially to remove larger particulates. This may be achieved using a plate and frame filter press or a rotary drum vacuum filter. The coarse filtration may help to improve the efficiency of subsequent filtration steps and reduce the load on finer filters.

Following coarse filtration, a finer filtration step may be employed to remove smaller particles and colloidal matter. This may involve the use of diatomaceous earth filters, which can effectively trap particles as small as 1-5 microns. In some cases, cross-flow microfiltration or ultrafiltration membranes may be utilized, offering even finer filtration capabilities.

The choice of filtration method and materials may depend on various factors, including the desired final product specifications, the composition of the initial wort, and the intended use of the syrup. For instance, if the syrup is intended for use in clear beverages, a more stringent filtration process may be necessary to achieve high clarity.

In some implementations, the filtration process may also incorporate ion exchange or activated carbon treatment to remove specific ionic compounds or color bodies. This may be particularly useful in controlling the flavor profile and appearance of the final syrup product.

Temperature control during the filtration process may be important to maintain optimal viscosity and prevent unwanted reactions. In some implementations, the filtration system may include heat exchangers to adjust the temperature of the liquid before and after filtration.

The filtered liquid may be monitored for turbidity, color, and other quality parameters using in-line sensors. This real-time monitoring may allow for adjustments to the filtration process as needed to maintain consistent product quality.

In some aspects, the filtration step may also serve to reduce microbial load in the liquid. While subsequent pasteurization or sterilization steps may be employed, effective filtration can significantly reduce the initial microbial population, potentially allowing for less severe heat treatment and better preservation of heat-sensitive components.

The design and operation of the filtration system may be optimized to minimize product loss and energy consumption while achieving the desired level of purification. This may involve careful selection of filter media, optimization of flow rates, and implementation of advanced control systems to manage the filtration process.

In a second aspect of the invention, there is provided a syrup prepared according to the first aspect of the invention, wherein the sugars comprise at least 70 wt%, at least 75 wt%, at least 80 wt%, or at least 85 wt% fermentable sugars. Optionally, the syrup comprises sugars which are at least 70 wt% fermentable sugars. Fermentable sugars are sugars which can be broken down by yeast into alcohol and carbon dioxide.

The sugars in the syrup may comprise monosaccharides, disaccharides, trisaccharides, tetrasaccharides and/or dextrins.

The monosaccharides may comprise fructose and/or glucose, the disaccharides may comprise sucrose and/or maltose, the trisaccharides may comprise maltotriose, and the tetrasaccharides may comprise maltotetraose.

Monosaccharides are the simplest forms of sugar and the monomers from which all carbohydrates are built. Disaccharides are formed when two monosaccharides are linked by a glycosidic bond. Three common examples are sucrose, lactose, and maltose. Trisaccharides are oligosaccharides composed of three monosaccharides linked by two glycosidic bonds, and tetrasaccharides are oligosaccharides composed of four monosaccharides linked by three glycosidic bonds.

Dextrins are mixtures of polymers of glucose units linked by glycosidic bonds, and are produced by the hydrolysis of starch using enzymes like amylases.

The syrup may comprise fermentable sugars including monosaccharides, disaccharides and/or trisaccharides. Longer-chain saccharides and branched polymers are generally not broken down by yeast and so may be described as non-fermentable sugars.

In the manufacture of fermentable beverages, such as beer, monosaccharides ferment faster than more complex sugars, such as disaccharides, because they have a simpler structure and fewer bonds to break.

The wort produced in the mashing step may comprise sugars which are at least 70-75 wt% fermentable sugars, such as glucose, fructose, sucrose, maltose, and maltotriose.

It may be desirable for the syrup to contain a maximum threshold of certain compounds, such as for use in the manufacture of beer. Keeping these compounds to a minimum level may be important in terms of the final taste or appearance of the beer, or to ensure safe consumption. For example, the syrup may further comprise one or more of the following compounds, in equal to or less than the following quantities:

≤0.5 mg/kg of lead

≤0.005 mg/kg of N-nitrosodimethylamine

≤7 wt% of protein

≤1 mg/kg of $SO_2$

<800 mg/L of polyphenols

<0.2 EBC of sensitive proteins

<20 mg/kg of iron

<5 mg/kg of copper, and/or

<100 mg/kg of zinc.

The units EBC (European Brewery Convention) refer to the colour of a beer. The colour of the beer is measured by placing a sample in a spectrophotometer at a wavelength of 430nm, according to the following formula:

$$EBC = 25 \times D \times A_{430}$$

in which:

D = dilution factor of the sample

$A_{430}$ = the light absorbance at 430nm in a 1cm cuvette.

Sensitive proteins are polypeptides responsible for haze formation in beer. These proteins are rich in the amino acids proline and glutamic acid and are heavily glycosylated with glucose.

Standard brewing equipment may be used to monitor levels of and remove undesirable compounds from the syrup.

It may be desirable for the syrup to possess certain physical properties, such as for use in the manufacture of beer. These physical properties may be important in terms of the handling, shelf life or appearance of the beer. For example, the syrup may comprise at least one of the following physical properties:

<7.0 EBC turbidity of 0.5% w/v solution

<0.4 EBC direct turbidity at 0°C after reconstitution

<1.2 EBC of 7-day test turbidity at 0°C after reconstitution

>100 seconds of foam stability after reconstitution.

The syrup may be used in the manufacture of beverages, optionally fermentable beverages, and further optionally beer. The syrup may be used in manufacture of beer, in which yeast ferments the sugars in the syrup to form alcohol and carbon dioxide.

The syrup may be used as a companion syrup in the manufacture of a fermentable beverage. A companion syrup is one used in addition to other fermentable content, in particular other syrups. Fermentable content refers to any compounds that yeast can convert into alcohol and carbon dioxide. Optionally, the companion syrup is up to 100 wt% of the total fermentable content used in the manufacture of the beverage. However, in a commercial brewing setting, it is likely to provide about 10 to about 30 wt% of the fermentable material.

Commercial beer manufacturing equipment is already set up to use syrups in the manufacture of beer. Therefore, it is advantageous to provide the fermentable content in the form of a syrup, so that there is no need for modification of existing beer manufacturing equipment.

The syrup may also be added during the manufacture of food, such as cakes and biscuits to give flavor and provide nutrients.

In a third aspect of the invention, there is provided a beer manufactured using the syrup according to the second aspect of the invention.

## EXEMPLARY METHOD

1. The bread is dried in warm air until a water content of 10 wt% is achieved.

2. A mixture of 50 wt% waste commercial white bread and 50 wt% waste commercial wholemeal bread is milled using a hammer mill to form bread crumbs with an average diameter of about 1mm.

3. The dried bread crumbs are blended with milled malted barley in a ratio of up to 95:5 wt% to create the dry blend (or solid ingredients) for mashing.

4. The dry blend is mixed with water in a mash cooker vessel. The ratio of the dry blend to water is from 1:5 wt% to 1:1 wt%.

5. The exogenous enzyme blend including amylases, proteases, beta glucanases, and xylanases is added to the dry blend and water mixture.

6. The water is initially heated during the mashing step to about 50°C over and maintained at this temperature. The water is then heated up to about 78°C, over a time period of about 60 minutes, and maintained at this temperature.

7. The spent raw material is removed using a mash filter to leave the liquid wort.

8. At this stage, some proteins are removed from the wort using a standard brewery kettle, to produce a stabilised and protein reduced wort.

9. The wort is cooled to about 60°C in a standard brewery counter current wort chiller apparatus, to form the "chilled wort".

10. The wort may, subject to the physo-chemical analysis, be subject to either or both of filtration and clarification using brane, exchange or similar technologies to control final specifications of the syrup including, but not limited to, colour, protein, element metals, and other ionic compounds.

11. The chilled wort is kept in a holding tank, before passing into the balancing tank to feed the evaporation process.

12. During the evaporation process, excess water is removed from the chilled wort using standard industrial evaporation equipment (such as falling or rising film equipment), to form the final syrup having 70 to 80 wt% solids, wherein up to 100 wt% of the total sugar content are fermentable sugars.

13. The final syrup is pasteurised using in line pasteurisation equipment, and packaged in a bulk container (such as a tanker) or in smaller packs as required.

| Process Stage | Equipment | Output |
|---|---|---|
| Receipt of raw materials | Warehousing / Storage Vessels | Good received |
| Processing of bread to be suitable for production (such as a form of drying and crumbing) | Air or similar ambient drying. Crumbed material for process. | Crumbed bread |
| Blending of dry raw materials and milling | Mill and grist case for collection of blended dry raw materials | Blend for mashing |
| Mashing of dry goods with liquor (water) | Standard brewery vessels including mash / mash cooker vessel, possibly lauter vessel, mash filter. | Liquid wort at desired composition. Removal of spent raw materials. |
| Stabilisation of wort / protein removal | Standard brewery kettle | Stabilised and protein reduced wort |
| Chilling of wort to 60°C | Standard brewery counter current wort chilling | Chilled wort |
| Holding tank | Balancing tank for feed to evaporation process. | |

(continued)

| Filtration and Clarification | Standard industry filtration and clarifaction such as membrane or exchange technologies | control of other factors such as protein, colour, ionic composition and transitional element |
| --- | --- | --- |
| evaporation | Standard industrial evaporation equipment to process from stabilised wort to correct composition of final syrup. Removal of excess water. | Syrup to final product specification |
| Pasteurisation | Equipment expected to be in line pasteurisation if required. | |
| Packaging tank | Holding tanks for final product | |
| Package to bulk container (tanker) or smaller pack as required. | Hygienic packaging equipment. Standard to any malt extract production plant. | Final packaged product |

As mentioned above, the wort may undergo additional purification steps, such as filtration or adsorption, to reduce ionic content and more closely match the characteristics of commercial glucose syrups. In some examples, ion exchange chromatography may be employed to selectively remove specific ions from thewort. This process may involve passing the syrup through a column containing charged resin beads that attract and retain ions of opposite charge.

The ionic content of the syrup may be adjusted to meet specific requirements for different applications. For example, in brewing applications, the levels of certain ions such as calcium, magnesium, and zinc may be optimized to support yeast health and fermentation efficiency. In some examples, the syrup may be treated to reduce sodium content, which can affect the flavor profile of the final product.

Membrane filtration techniques, such as nanofiltration or reverse osmosis, may also be used to control the ionic composition of the syrup. These methods can selectively remove ions based on their size and charge, allowing for precise control over the final ionic profile of the syrup.

The purification process may be tailored to achieve specific conductivity levels in the syrup, which can be an indicator of overall ionic content. In some aspects, the conductivity of the syrup may be adjusted to fall within a range of 1000 to 5000 $\mu$S/cm, depending on the intended application and customer specifications.

By controlling the ionic content, the syrup may be formulated to have minimal impact on the mineral balance of the final product, whether it be a fermented beverage or a food item. This can help ensure consistency in taste, appearance, and performance across different batches and applications.

In some examples, the process may utilize waste bread, thereby contributing to the reduction of food waste and the environmental impact associated with its disposal. The use of bread in the mashing step may also reduce the reliance on malted grains, potentially leading to lower production costs and energy consumption.

In some examples, the process may involve the use of specific enzymes during the mashing step to enhance the conversion of bread to sugars. This can improve the efficiency of the process and increase the yield of fermentable sugars in the final syrup.

The present disclosure also provides a syrup prepared according to the described process. In some examples, the syrup may comprise sugars, wherein at least 70 wt% of the sugars are fermentable sugars. This high percentage of fermentable sugars makes the syrup particularly suitable for use in the production of fermented beverages, such as beer.

In some examples, the syrup may be used as a companion syrup in the manufacture of fermented beverages, providing flexibility in brewing processes and allowing for the partial replacement of traditional malt-based syrups. This versatility can enable brewers to reduce their environmental impact and potentially lower production costs without sacrificing quality.

The present disclosure further provides a beer manufactured using the syrup. This application demonstrates the practical utility of the syrup in producing a commercial product, showcasing its potential for widespread use in the brewing industry.

The enzyme blend composition may be tailored to optimize the conversion of bread and malted grains into fermentable sugars. In some examples, the enzyme blend may include a combination of different enzyme types, each serving a specific function in the breakdown of complex carbohydrates and proteins.

A first enzyme group, which may constitute about 50% of the enzyme blend In some examples, is a multi-component enzyme preparation that may contain various enzymes such as $\alpha$-amylase, $\beta$-glucanase, and protease. This combination of enzymes may help in the efficient breakdown of starches, glucans, and proteins present in the bread and malted grains.

A second enzyme group, which may comprise about 30% of the enzyme blend in some aspects. This enzyme may be particularly effective in converting dextrins and oligosaccharides into glucose, potentially increasing the overall fermentability of the syrup.

A third enzyme group, which may make up about 10% of the enzyme blend, is a preparation that may contain xylanase and β-glucanase. These enzymes may aid in the breakdown of cell wall components such as arabinoxylans and β-glucans, potentially improving the extraction efficiency and reducing the viscosity of the mash.

A fourth enzyme group, which may make up the remaining 10% of the enzyme blend may be composed of additional protease enzymes. These may further assist in breaking down proteins present in the bread and malted grains, potentially reducing haze-forming proteins and increasing the nitrogen content available for yeast nutrition during fermentation.

In some examples, the enzyme blend may be added at a dose measured in ml per kg of dry matter (DM). In some examples, dosages between 3.0 and 4.5 ml/kg DM, between 3.5 and 4.0 ml/kg DM, or between 3.7 and 3.8 ml/kg DM are possible. The specific dosage may be adjusted based on factors such as the composition of the bread and malted grain mixture, the desired sugar profile of the final syrup, and the process conditions.

The use of this enzyme blend at the specified dosage may result in improved efficiency of the mashing process, potentially leading to higher yields of fermentable sugars and a more consistent syrup product. However, it should be noted that the optimal enzyme blend composition and dosage may vary depending on the specific raw materials used and the desired characteristics of the final syrup.

In some examples, the bread used in the syrup production process may comprise a blend of different bread types and malted grains. For instance, the bread composition may include 30% malted bread, 30% oatmeal bread, 30% white bread, and 10% high diastatic power (HDP) malt. This specific blend may be selected to optimize the fermentable sugar content and enzymatic activity in the resulting syrup.

The malted bread component may contribute additional enzymes and fermentable sugars to the mixture. Oatmeal bread may provide a unique flavor profile and additional nutrients. White bread may offer a neutral base and contribute to the overall starch content. The inclusion of high diastatic power malt, even in a small percentage, may significantly enhance the enzymatic activity during the mashing process.

In some aspects, the ratio of different bread types may be adjusted based on factors such as availability, cost, and desired syrup characteristics. For example, the percentage of white bread may be increased to potentially reduce the color of the final syrup, which may be desirable for certain applications.

The bread used in the syrup production process may be sourced from various origins, including commercial bakeries, surplus bread from retail outlets, or bread specifically produced for this purpose. In some examples, the bread may be waste or surplus bread that would otherwise be discarded, contributing to the environmental sustainability of the process.

The composition of the bread blend may influence various aspects of the syrup production process and the final product characteristics. These may include the efficiency of the mashing process, the sugar profile of the resulting syrup, the color and flavor of the syrup, and its suitability for different fermentation applications.

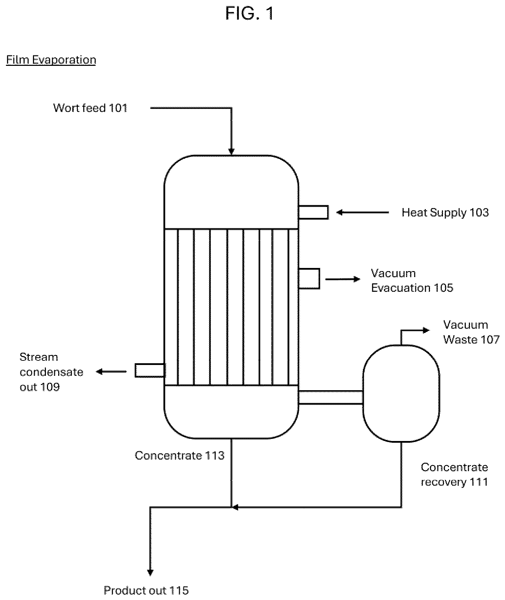

In some examples, a film evaporation system 100 is used for concentrating wort into syrup. FIG. 1 illustrates an example of such a film evaporation system 100. The system 100 includes several components designed to efficiently remove excess water from the wort and produce a concentrated syrup.

In some examples, the film evaporation system 100 comprises a falling film evaporator with multiple components and connections. However, it should be noted that many other evaporation techniques are possible and are considered to be within the scope of this disclosure, as discussed above. A wort inlet 101 is positioned at the top of the evaporator, allowing wort to enter the system 100. The system 100 also includes a steam inlet 103 to provide heat for the evaporation process.

In some examples, the film evaporation system 100 includes a vacuum port 105 that enables vacuum conditions within the system 100. This vacuum condition may facilitate the evaporation process at lower temperatures, potentially preserving heat-sensitive components in the wort. A vapor outlet 107 allows for the removal of evaporated components from the system 100.

In some examples, the system 100 includes a condensate outlet 109 for collecting condensed liquid from the evaporation process. This condensate may be further processed or disposed of as needed.

In some examples, a recovery vessel 111 is connected to the main evaporator body to collect and process concentrate. The concentrate exits through a concentrate outlet 113 and flows to the recovery vessel 111. The final concentrated syrup product exits the system 100 through a syrup outlet 115.

In some examples, the evaporator contains vertical tubes or plates where the wort flows as a thin film while being heated, enabling efficient evaporation under vacuum conditions. This design may allow for rapid heat transfer and efficient water removal from the wort.

In some examples, the concentration process in the film evaporation system 100 may be controlled to achieve specific characteristics in the final syrup. The syrup may be concentrated to comprise 20-30 wt% water, or conversely, to achieve 70-80 wt% solids content. This level of concentration may provide an optimal balance between syrup viscosity and stability.

In some examples, the concentration step comprises heating to remove excess water. This heating process may be carried out for a duration between 30 to 180 minutes, and in some examples, for between 45 and 60 minutes. The specific duration may be adjusted based on factors such as the initial wort concentration, desired final concentration, and system capacity.

In some examples, after the concentration process, the syrup may be pasteurized using in-line pasteurization equipment. This pasteurization step may help ensure the microbiological stability of the final product.

In some examples, following the concentration and pasteurization processes, the syrup may be packaged for distribution. The syrup may be packaged in a bulk container, such as a tanker, for large-scale distribution. Alternatively, the syrup may be packaged in smaller packs for retail or smaller-scale use. In some examples, the syrup may be stored at a temperature below 70 °C.

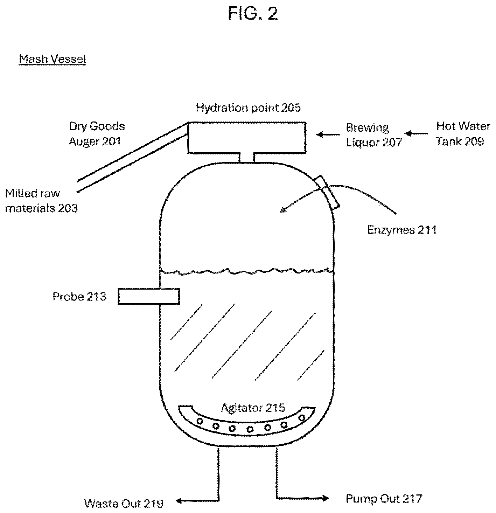

In some examples, the process for manufacturing an environmentally friendly syrup suitable for use in the production of fermented beverages may utilize a mash vessel as depicted in FIG. 2. The mash vessel may serve as a crucial component in the brewing process, facilitating the steeping of solid ingredients in water to form a mixture comprising liquid sugar solution.

FIG. 2 illustrates a side view of a mash vessel for processing raw materials into a liquid mixture. The mash vessel may include several components arranged to facilitate the mixing and processing of ingredients.

In some examples, the mash vessel may receive raw materials through a raw materials inlet 203 which connects to a goods auger 201 for conveying the materials. The raw materials may comprise solid ingredients including malted cereal grains and at least 50 wt% bread. In some examples, the solid ingredients may comprise at least 60 wt%, 70 wt%, 80 wt%, 90 wt%, or 95 wt% bread. The malted cereal grains may be selected from one or more of malted barley, high diastatic power malted barley, malted wheat, malted maize, malted rice, malted oats, and malted barley grains. In some examples, the solid ingredients may comprise at least 5 wt%, 10 wt%, 20 wt%, 30 wt%, 40 wt%, or 50 wt% malted cereal grains.

In some examples, the bread used in the mashing process may comprise bread that has been milled to give a crumb consistency with an approximate mean diameter of 1 mm. The bread may have a water content of less than 12 wt% water, and In some examples, less than 10 wt% water. In certain embodiments, the bread may comprise toasted bread.

A hydration inlet 205 may be positioned at the top of the vessel to introduce moisture. The vessel may include a liquor inlet 207 that receives brewing liquid from a water tank 209. The ratio of water to solid ingredients in the mashing step may be between 1:1 and 10:1, and in some examples, between 3.5:1 and 6:1. In certain embodiments, the solid:liquid ratio in the mashing step may be 1:4.

An enzyme inlet 211 may be incorporated into the upper portion of the vessel to allow introduction of enzymatic materials. In some examples, the solid ingredients may further comprise rice hulls and/or an enzyme blend introduced through the enzyme inlet 211.

A monitoring probe 213 may extend into the vessel wall to enable process monitoring. The monitoring probe 213 may be used to monitor various parameters, including temperature and pH. In some examples, the pH of the mixture in the mashing step may be maintained between 4 and 6.5, and in certain cases, between 5 and 5.5.

Inside the vessel, a mixing blade 215 may be positioned at the bottom to facilitate ingredient mixing and maintain suspension. The mixing blade 215 may help ensure thorough mixing of the solid ingredients with the water, promoting efficient conversion of starches to sugars.

In some examples, the water in the mash vessel may be initially heated during the steeping step to about 40°C, and then heated up to about 80°C over a time period of about 30 to 180 minutes. In certain embodiments, the water may be initially heated to about 50°C, and then heated up to about 80°C over a time period of about 60 minutes.

The vessel may include two outlet ports at the bottom - a pump outlet 217 for removing the processed liquid mixture and a waste outlet 219 for removing spent materials. This configuration may allow for separation of the desired liquid product from waste materials during processing.

In some examples, the solid ingredients may comprise 30% malted, 30% oatmeal, 30% white bread and 10% high diastatic power malt. This specific combination of ingredients may be introduced through the raw materials inlet 203 and processed in the mash vessel to produce a liquid sugar solution with desired characteristics.

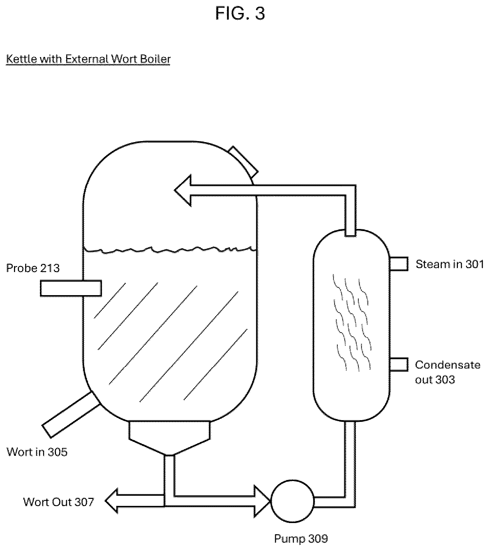

In some examples, a kettle system 300 with an external wort boiler is used in the brewing process to heat and process wort. FIG. 3 illustrates an example of such a kettle system 300. The system 300 is designed to efficiently heat the wort and remove unwanted compounds, preparing it for fermentation.

In some examples, the kettle system 300 comprises a main vessel and an external boiler component. A wort inlet 305 is positioned on the main vessel, allowing wort to enter the system 300. The system 300 also includes a wort outlet 307 for discharging the processed wort.

In some examples, the kettle system 300 includes a monitoring probe 213 that extends into the main vessel. The monitoring probe 213 may be used to monitor various process conditions such as temperature, pressure, or wort composition during the boiling process.

In some examples, the external boiler component of the kettle system 300 is connected to the main vessel and includes a steam inlet 301. The steam inlet 301 allows for the introduction of steam to heat the wort. A condensate outlet 303 is also present on the external boiler, enabling the removal of condensed water from the steam heating process.

In some examples, a circulation pump 309 is positioned between the main vessel and the external boiler. The circulation pump 309 facilitates the movement of wort through the system 300, ensuring continuous heating and processing of the wort.

In some examples, the circulation pump 309 moves the wort from the main vessel through the external boiler and back. This circulation allows for efficient heat transfer from the steam to the wort, ensuring uniform heating and processing.

In some examples, the kettle system 300 may be used to extract the liquid sugar solution from the mixture produced in the mashing step. The circulation of the wort through the external boiler may facilitate this extraction process by maintaining optimal temperature conditions.

In some examples, the kettle system 300 may include additional components for filtering the liquid sugar solution. These components may be used to remove one or more of: proteins, color compounds, ionic components, or particulates according to a final specification. The filtering process may occur as the wort circulates through the system 300, ensuring that the final product meets the desired quality standards.

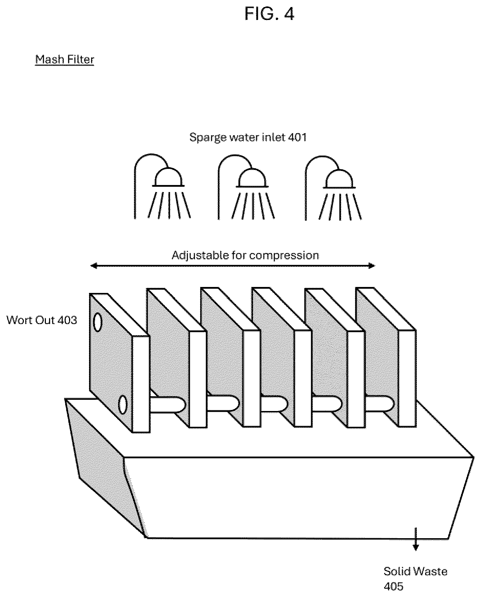

In some examples, a mash filter apparatus may be used in the brewing process to separate the liquid wort from solid materials after the mashing step. FIG. 4 illustrates an orthogonal view of a mash filter apparatus. The mash filter apparatus comprises a series of parallel filter plates that can be adjusted for compression. This adjustable compression may allow for optimization of the filtering process based on the specific characteristics of the mash being filtered. In some examples, other separation devices such as a decanter may be used instead of, or in addition to, the mash filter apparatus.

In some examples, the mash filter apparatus includes a sparge inlet 401 positioned at the top of the apparatus. The sparge inlet 401 consists of multiple spray nozzles arranged in series to distribute sparge water across the filter plates. This distribution of sparge water helps to rinse the mash and extract additional sugars from the grain bed, improving the overall efficiency of the wort extraction process.

In some examples, a wort outlet 403 is located at one end of the filter plates. The wort outlet 403 collects the filtered wort as it passes through the filter plates, separating it from the solid materials. This filtered wort may then be transferred to subsequent stages of the brewing process, such as boiling or fermentation.

The mash filter apparatus also includes a waste outlet 405 at the bottom for removing solid waste materials that are filtered out during the process. These solid materials, often referred to as spent grains, may be collected for disposal or repurposing, such as animal feed or compost.

In some examples, the filter plates in the mash filter apparatus are designed to efficiently separate the liquid wort from the solid materials. The plates may be made of a material that allows for effective filtration while withstanding the pressures and temperatures involved in the mashing process. The spacing and design of the filter plates may be optimized to balance filtration efficiency with flow rate, ensuring thorough separation without unnecessarily prolonging the process.

In some examples, the mash filter apparatus may be used to polish the syrup by filtration to remove certain components. This filtration step may help to achieve desired specifications for the final syrup product, such as clarity, color, or specific chemical composition. The adjustable compression of the filter plates may allow for fine-tuning of the filtration process to target specific components for removal.

The mash filter apparatus may work in conjunction with other components of the brewing system, such as the mash vessel described earlier. The mash may be transferred from the mash vessel to the mash filter apparatus for separation, with the resulting wort then moving on to subsequent stages of the brewing process.

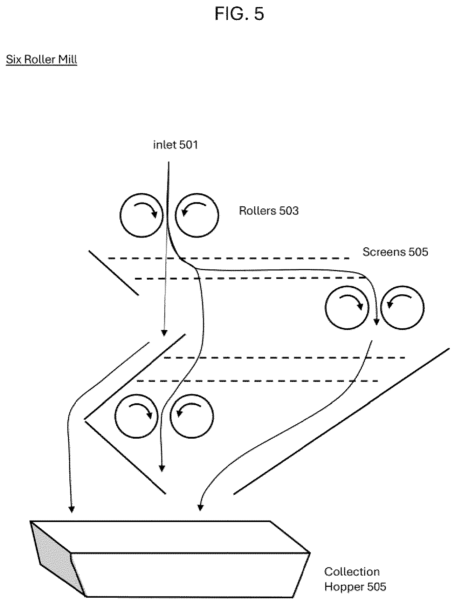

In some examples, a six roller mill apparatus 500 is used in the brewing process to prepare raw materials for mashing. FIG. 5 illustrates a system diagram of the six roller mill apparatus 500. The apparatus 500 is designed to efficiently mill and process materials, such as bread and malted grains, into a fine consistency suitable for the mashing step.

In some examples, the six roller mill apparatus 500 includes a material inlet 501 positioned at the top of the apparatus 500. The material inlet 501 allows for the introduction of raw materials, such as bread and malted grains, into the milling system.

In some examples, the raw materials pass through three sets of processing rollers 503 arranged in a vertical configuration. The processing rollers 503 are designed to progressively reduce the size of the material particles as they move through the system. Each set of processing rollers 503 may be adjusted to achieve the desired particle size reduction.

In some examples, filtration screens 505 are positioned between the sets of processing rollers 503. The filtration screens 505 allow for material separation during processing, ensuring that only particles of the desired size continue through the milling process.

In some examples, the processed material flows downward through the six roller mill apparatus 500 under gravity, passing through each set of processing rollers 503 and filtration screens 505 in sequence. This gravity-fed design may help to maintain a consistent flow of material through the system and reduce energy consumption.

In some examples, the six roller mill apparatus 500 is used to mill bread to give a fine, flour-like consistency. The processing rollers 503 and filtration screens 505 may be configured to produce bread particles having a mean diameter of less than 1mm. This fine consistency may increase the surface area of the bread, potentially improving the efficiency of the enzymatic conversion of bread to sugars during the subsequent mashing step.

In some examples, the milled material is ultimately collected in a collection vessel positioned at the bottom of the six roller mill apparatus 500. This collection vessel may be connected to the mashing system, allowing for efficient transfer of the milled materials to the next stage of the brewing process.

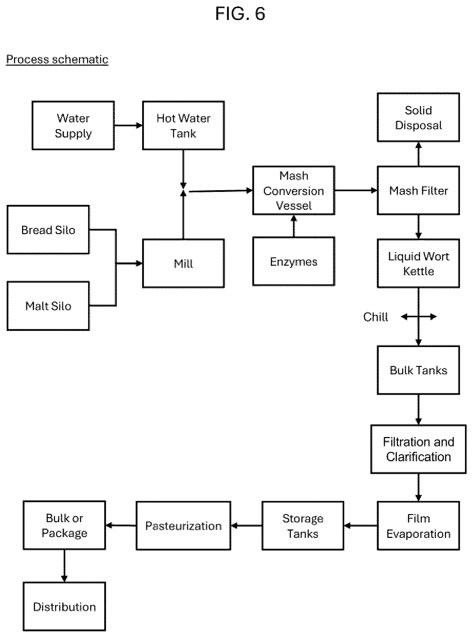

In some examples, FIG. 6 illustrates a process schematic for manufacturing syrup from bread and malt. The schematic provides an overview of the entire process, from raw material handling to the final packaging of the syrup product.

In some examples, the process begins with the storage and preparation of raw materials. A bread silo and a malt silo are used to store the bread and malt respectively. These raw materials are then fed into a mill for size reduction, preparing them for the mashing process.

In some examples, the milled materials are combined with hot water and enzymes in a mash conversion vessel. The hot water is supplied from a hot water tank, which is connected to a water supply. In this mash conversion vessel, the starches from the bread and malt are converted into sugars through enzymatic action.

In some examples, the enzyme blend used in the mashing process comprises a first enzyme group, a second enzyme group, a third enzyme group, and a fourth enzyme group. The first enzyme group may comprise pullulanase, $\alpha$-amylase, cellulase, xylanase, protease, and lipase. The second enzyme group may comprise amyloglucosidase. The third enzyme group may comprise xylanase and $\beta$-glucanase. The fourth enzyme group may comprise protease.

In some examples, the enzyme blend comprises 50% of the first group, 30% of the second group, 10% of the third group, and 10% of the fourth group. This specific blend may be optimized to efficiently break down the complex carbohydrates and proteins present in the bread and malt mixture.

In some examples, the enzyme blend dose is between 3.0 and 4.5 ml/kg dry matter, or more specifically, between 3.5 and 4.0 ml/kg dry matter. In some examples, the enzyme dose may be around 3.8 ml/kg dry matter. The precise dosage may be adjusted based on the specific composition of the bread and malt mixture and the desired characteristics of the final syrup product.

In some examples, after the mashing process, the mixture flows to a mash filter. This filter separates the liquid portion (wort) from the solid materials. The solid materials are disposed of as waste, while the liquid wort proceeds to the next stage of the process.

In some examples, the filtered liquid wort is then transferred to a liquid wort kettle. **In** this kettle, the wort may be boiled to sterilize the liquid and potentially concentrate the sugars.

In some examples, after the kettle stage, the wort undergoes a chilling process. This chilled wort is then collected in bulk tanks before proceeding to the next stage of the process.

In some examples, after the chilling process, the wort may undergo filtration and clarification steps. These steps may help to remove any remaining particulates, proteins, or other unwanted compounds from the wort. The filtration process may involve passing the chilled wort through one or more filter media, such as diatomaceous earth or membrane filters. This may help to achieve the desired clarity and purity of the liquid.

The clarification step may further refine the wort by removing haze-forming proteins and polyphenols. This process may involve the use of fining agents or centrifugation techniques. In some cases, the filtration and clarification steps may be combined into a single operation using advanced filtration technologies.

The filtered and clarified wort may then proceed to the evaporation stage for concentration into syrup. These intermediate processing steps may contribute to the overall quality and consistency of the final syrup product. This step concentrates the wort into a syrup by removing excess water. The concentrated syrup is then moved through storage tanks.

In some examples, the syrup undergoes a pasteurization process to ensure microbiological stability. After pasteurization, the syrup is ready for packaging.

In some examples, the final step in the process is packaging the syrup. The syrup may be packaged in bulk containers for industrial use or in smaller packages for retail distribution. The packaged product then enters the distribution system for delivery to customers.

In some examples, this process schematic illustrates how standard brewing and syrup manufacturing equipment can be arranged to efficiently convert bread and malt into a fermentable syrup product. The system incorporates provisions for material handling, thermal processing, separation, concentration, and packaging operations, demonstrating the comprehensive nature of the syrup production process.

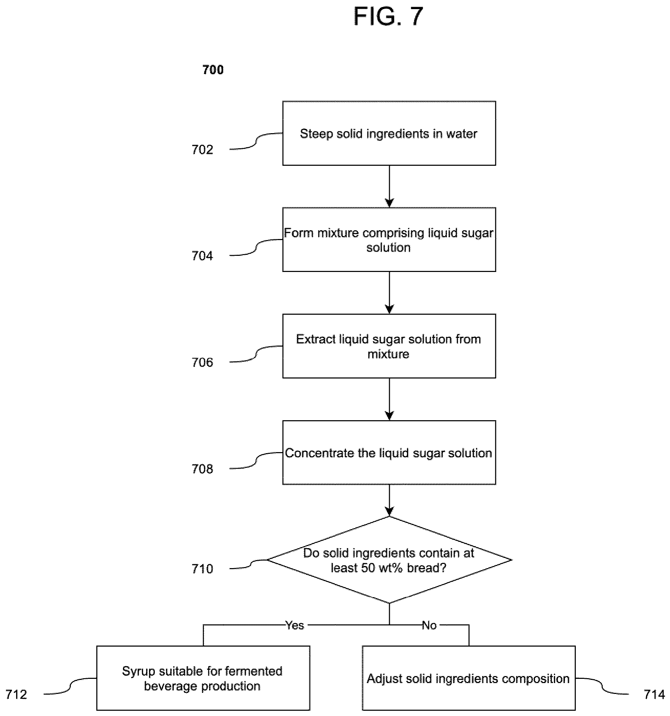

In some examples, method 700 for manufacturing syrup suitable for fermented beverage production is illustrated in FIG. 7. Method 700 provides a systematic approach to producing an environmentally friendly syrup using a combination of bread and malted cereal grains.

In some examples, the method 700 begins with a step 702 of steeping solid ingredients in water. The solid ingredients may comprise malted cereal grains and at least 50 wt% bread. The steeping process allows the solid ingredients to absorb water and begin breaking down complex carbohydrates.

In some examples, the method 700 proceeds to a step 704 where a mixture comprising liquid sugar solution is formed. During this step, enzymes naturally present in the malted cereal grains, as well as any added enzymes, work to convert the starches in the bread and grains into fermentable sugars.

In some examples, the method 700 continues with a step 706 of extracting the liquid sugar solution from the mixture. This extraction process may involve filtering or separating the liquid portion from the solid residues.

In some examples, the method 700 includes a step 708 of concentrating the liquid sugar solution. This concentration step may involve heating the solution to remove excess water, potentially using equipment such as the film evaporation system described earlier.

In some examples, the method 700 incorporates a decision step 710 that evaluates whether the solid ingredients contain at least 50 wt% bread. This decision step 710 is crucial in determining the environmental friendliness and efficiency of the syrup production process.

In some examples, if the evaluation at the decision step 710 determines that the solid ingredients contain at least 50 wt% bread (Yes branch), the method 700 proceeds to a step 712 where syrup suitable for fermented beverage production is produced. This syrup may contain a high percentage of fermentable sugars, potentially comprising at least 70 wt%, at least 75 wt%, at least 80 wt%, or at least 85 wt% fermentable sugars.

In some examples, the fermentable sugars in the syrup may comprise monosaccharides, disaccharides, and/or trisaccharides. The monosaccharides may include fructose and/or glucose, while the disaccharides may comprise sucrose and/or maltose. Trisaccharides in the syrup may include maltotriose.

In some examples, if the evaluation at the decision step 710 determines that the solid ingredients do not contain at least 50 wt% bread (No branch), method 700 moves to step 714, where the composition of the solid ingredients is adjusted. This adjustment may involve adding more bread to the mixture to meet the 50 wt% threshold.

In some examples, the syrup produced by method 700 may have specific characteristics that make it suitable for use in fermented beverage production. For instance, the syrup may contain $\leq 0.5$ mg/kg of lead, $\leq 0.005$ mg/kg of N-nitrosodimethylamine, $\leq 7$ wt% of protein, $\leq 1$ mg/kg of $SO_2$, <800 mg/L of polyphenols, <0.2 EBC of sensitive proteins, <20 mg/kg of iron, <5 mg/kg of copper, and <100 mg/kg of zinc.

In some examples, the syrup may also possess certain physical properties that are desirable for fermented beverage production. These properties may include <7.0 EBC turbidity of 0.5% w/v solution, <0.4 EBC direct turbidity at 0°C after reconstitution, <1.2 EBC of 7-day test turbidity at 0°C after reconstitution, and >100 seconds of foam stability after reconstitution.

In some examples, the syrup produced by method 700 may be used as a companion syrup in the manufacture of fermented beverages. When used as a companion syrup, it may constitute from 5 to 50 wt% of the total fermentable content used in the manufacture of the beverage.

In some examples, the syrup produced by method 700 may also be used as a food ingredient, potentially in products such as baked goods or confectionery items.

In some examples, method 700 may be used to produce syrup for manufacturing beer. The beer manufactured using this syrup may have unique characteristics due to the high proportion of bread used in the syrup production process.

In some examples, the bread used in the mashing step may be toasted. Toasting the bread can alter the flavour profile of the bread, potentially creating a desirable flavour in the syrup produced by the process. The toasting process may involve heating the bread to a temperature sufficient to cause the Maillard reaction, a chemical reaction between amino acids and reducing sugars that gives browned food its distinctive flavor. The degree of toasting may be adjusted to achieve the desired flavour profile in the syrup.

In some examples, the bread may be dried to achieve a water content of less than 10 wt% water. The drying process may involve exposing the bread to a heat source, such as an oven or a heated air stream, to evaporate the water content. Dried bread may have a lower risk of mould growth and a longer shelf life compared to fresh bread, making it more suitable for storage and use in the mashing step. The drying process may also reduce the weight of the bread, potentially reducing transportation costs and energy consumption.

In some examples, the bread may be milled to give a fine, flour-like consistency, with particles having a mean diameter of less than 1mm. The milling process may involve grinding the bread using a mill or a similar device to reduce the size of the bread particles. Milling the bread to a fine consistency can increase the surface area of the bread, potentially improving the efficiency of the enzymatic conversion of bread to sugars during the mashing step.

In some examples, the syrup produced by the process may comprise fermentable sugars including monosaccharides, disaccharides, and/or trisaccharides. Monosaccharides, such as glucose and fructose, are the simplest form of sugars and can be readily fermented by yeast to produce alcohol and carbon dioxide. Disaccharides, such as sucrose and maltose, are composed of two monosaccharide units and can be broken down by yeast into monosaccharides for fermentation. Trisaccharides, such as maltotriose, are composed of three monosaccharide units and can also be broken down by yeast for fermentation. The presence of these fermentable sugars in the syrup can contribute to the production of alcohol in the fermented beverage.

In some examples, the syrup produced by the process may be used as a companion syrup in the manufacture of a fermented beverage. The companion syrup may provide about 10 to about 30 wt% of the fermentable material used in the manufacture of the beverage. This flexibility in the proportion of the fermentable material provided by the companion syrup can allow brewers to adjust the flavour profile and other characteristics of the beverage to suit their specific requirements.

In some examples, the syrup may be added during the manufacture of food products, such as cakes and biscuits. The addition of syrup to these food products can impart a unique flavour, color, and provide additional nutrients, potentially enhancing the taste and nutritional value of the food products. The syrup may also contribute to the moisture content of the food products, potentially improving their texture and shelf life.

In some examples, the syrup may possess specific physical properties that make it particularly suitable for use in the manufacture of fermented beverages and food products. For instance, the syrup may have a turbidity of less than 7.0 EBC (European Brewery Convention) of a 0.5% w/v solution. Turbidity is a measure of the cloudiness or haziness of a liquid caused by large numbers of individual particles that are generally invisible to the naked eye. A low turbidity value indicates a clear, transparent syrup, which can contribute to the clarity and appearance of the final product.

In some examples, the syrup may have a direct turbidity at 0°C after reconstitution of less than 0.4 HMESC (Hot Water Extract of Malt in the Mash, expressed as a percentage of the dry matter). This property can be important in the brewing process, as it can affect the clarity and stability of the final beverage.

In some examples, the syrup may have a 7-day test turbidity at 0°C after reconstitution of less than 1.2 HMESC. This property can provide an indication of the stability of the syrup over time, potentially contributing to the shelf life of the syrup and the final product.

In some examples, the syrup may have a foam stability of more than 100 seconds after reconstitution. Foam stability is a measure of the ability of a liquid to maintain a foam or froth when agitated. A high foam stability can be desirable in the manufacture of fermented beverages, such as beer, where a stable, long-lasting head of foam is often considered a mark of quality.

The syrup present syrup may be analyzed for its sugar profile, including glucose, sucrose, maltose, and maltotriose content. The sugar profile may vary depending on the type of bread used and processing conditions. In some aspects, the sugar composition of the syrup may be determined using high-performance liquid chromatography (HPLC) or other suitable analytical techniques.

In some examples, the sugar content of the syrup may be tailored to specific requirements based on the type and composition of bread used in the process. The relative proportions of different sugars in the syrup can be adjusted by selecting particular bread types or blends, as well as by modifying process parameters such as enzyme composition and mashing conditions. For instance, the glucose content in the syrup may range from 5 to 95 wt% of the total sugar content. Similarly, the maltose, a disacchariso, content may be adjusted within a range of 5 to 95 wt%, and the maltotriose, a trisaccharide, content may also vary from 5 to 95 wt%. This flexibility in sugar composition may allow for the production of syrups with diverse fermentation profiles, potentially suitable for a wide range of brewing applications or other fermented beverage productions. The ability to tailor the sugar content may provide brewers with greater control over the fermentation process and the characteristics of the final product.

In some examples, the ratio of different sugars in the syrup may be adjusted by modifying process parameters such as mashing temperature, enzyme blend composition, or the ratio of bread types used in the initial mixture. For instance, increasing the proportion of malted grains or adjusting the enzyme blend may lead to higher maltose content, which may be desirable for certain brewing applications.

The sugar profile of the syrup may influence its fermentability and suitability for different types of fermented beverages. A higher proportion of simple sugars like glucose and fructose may result in faster fermentation rates, while a balanced profile with maltose and maltotriose may provide a more gradual fermentation process and potentially contribute to the body and mouthfeel of the final product.

The sugar profile analysis may be used to standardize the syrup composition across different batches, ensuring consistency in the fermentation process and final product characteristics. This analysis may also be used to tailor the syrup for specific applications, such as producing different styles of beer or other fermented beverages.

The fermentability of these commercial syrups may also vary. For instance, the Cargill 10170 may have a fermentability of 90% to 93%, while the Cargill 10078 may have a lower fermentability of 74% to 82%. These differences in fermentability may influence the final alcohol content and residual sweetness of the fermented beverage.

In some examples, the sugar composition of these commercial syrups may be tailored to specific brewing requirements, allowing brewers to achieve desired flavor profiles, alcohol content, and other characteristics in their final products. The choice of syrup may depend on factors such as the style of beer being produced, the desired fermentation profile, and the specific yeast strain being used.

These potential improvements may contribute to enhancing the efficiency, sustainability, and versatility of the syrup production process, potentially leading to a wider range of applications and improved economic viability.

A number of implementations have been described. Nevertheless, it will be understood that various modifications may be made without departing from the spirit and scope of the disclosure. Accordingly, other implementations are within the scope of the following claims.

## Claims

1. A method for the manufacture of an environmentally friendly syrup suitable for use in the production of a fermented beverage, comprising:

   steeping solid ingredients in water to form a mixture comprising liquid sugar solution;
   extracting the liquid sugar solution from the mixture;
   concentrating the liquid sugar solution;
   wherein the solid ingredients comprise malted cereal grains and at least 50 wt% bread.

2. The process according to claim 1, further comprising filtering the liquid sugar solution to remove one or more of: proteins, colour, ionic components, or particulates according to a final specification.

3. The process according to claims 1 or 2, wherein the solid ingredients comprise at least 60 wt% bread, at least 70 wt% bread, at least 80 wt% bread, at least 90 wt% bread, or at least 95 wt% bread.

4. The process according to any of claims 1 to 3, wherein the solid ingredients comprise at least 5 wt%, at least 10 wt%, at least 20 wt%, at least 30 wt%, at least 40 wt%, or at least 50 wt% malted cereal grains.

5. The process according to any of claims 1 to 4, wherein the solid ingredients further comprise rice hulls and/or an enzyme blend.

6. The process according to any of claims 1 to 5, wherein the malted cereal grains are selected from one or more of malted barley, high diastic power malted barley, malted wheat, malted maize, malted rice, malted oats, and malted barley grains.

7. The process according to any of claims 1 to 6, wherein ratio of water to solid ingredients in the mashing step is between 1:1 and 10:1, and optionally between 3.5:1 and 6:1.

8. The process according to any of claims 1 to 7, wherein the water is initially heated during the steeping step to about 40°C, and then heated up to about 80°C over a time period of about 30 to 180 minutes, or the water is initially heated to about 50°C, and then heated up to about 80°C over a time period of about 60 minutes.

9. The process according to any of claims 5 to 8, wherein the enzyme blend comprises a first enzyme group, a second enzyme group, a third enzyme group, and a fourth enzyme group.

10. The process according to claim 9, wherein:

    the first enzyme group comprises pullulanase, $\alpha$-amylase, cellulase, xylanase, protease, lipase
    the second enzyme group comprises amyloglucosidase,
    the third enzyme group comprises xylanase and $\beta$-glucanase, and
    the fourth enzyme group comprises protease.

11. The process according to claims 9 or 10, wherein the enzyme blend comprises 50% of the first group, 30% of the second group, 10% of the third group, and 10% of the fourth group.

12. The process according to any of claims 5 to 11, wherein the enzyme blend dose is between 3.0 and 4.5 ml/kg dry matter, 3.5 and 4.0 ml/kg dry matter, or 3.7 and 3.8 ml/kg dry matter.

13. The process according to any of claims 1 to 12, wherein the pH of the mixture in the mashing step is between 4 and 6.5, optionally between 5 and 5.5.

14. The process according to any of claims 1 to 13, wherein the bread comprises bread that has been milled to give a crumb consistency with an approximate mean diameter of 1 mm.

15. The process according to any of claims 1 to 14, wherein the bread has a water content between 1 wt% and 40 wt%, , between 10 wt% and 30 wt%, 10 wt% and 20 wt%, or 10 wt% to 15 wt%.

16. The process according to any of claims 1 to 15, wherein the bread comprises toasted bread.

17. The process according to any of claims 1 to 16, wherein the concentration step comprises heating to remove excess water between 30 to 180 minutes, optionally for between 45 and 60 minutes.

18. A syrup prepared according to the process of any one of claims 1 to 17, wherein sugars of the syrup comprise at least 70 wt%, at least 75 wt%, at least 80 wt%, or at least 85 wt% fermentable sugars.

19. The syrup according to claim 18, wherein the fermentable sugars comprise monosaccharides, disaccharides and/or trisaccharides.

20. The syrup according to claim 19, wherein the monosaccharides comprise fructose and/or glucose, the disaccharides comprise sucrose and/or maltose, and the trisaccharides comprise maltotriose.

21. The syrup according to any one of claims 18 to 20, wherein the syrup further comprises one or more of the following compounds:

$\leq$0.5 mg/kg of lead
$\leq$0.005 mg/kg of N-nitrosodimethylamine
$\leq$7 wt% of protein
$\leq$1 mg/kg of $SO_2$
<800 mg/L of polyphenols
<0.2 EBC (European Brewery Convention) of sensitive proteins
<20 mg/kg of iron
<5 mg/kg of copper, and/or
<100 mg/kg of zinc.

22. The syrup according to any one of claims 18 to 21, wherein the syrup comprises at least one of the following physical properties:

<7.0 EBC turbidity of 0.5% w/v solution
<0.4 EBC direct turbidity at 0°C after reconstitution
<1.2 EBC of 7-day test turbidity at 0°C after reconstitution
>100 seconds of foam stability after reconstitution.

23. The syrup according to any one of claims 18 to 22, wherein the syrup is used as a companion syrup in the manufacture of fermented beverages, and optionally the companion syrup is from 5 to 50 wt% of the total fermentable content used in the manufacture of the beverage.

24. The syrup according to any one of claims 18 to 23, wherein the syrup is a food ingredient.

25. A beer manufactured using the syrup according to any one of claims 18 to 23.

**Amended claims in accordance with Rule 137(2) EPC.**

1. A method for the manufacture of an environmentally friendly syrup suitable for use in the production of a fermented beverage, comprising: steeping solid ingredients in water to form a mixture comprising liquid sugar solution; extracting the liquid sugar solution from the mixture; concentrating the liquid sugar solution to form a syrup comprising 70-80 wt% solids; wherein the solid ingredients comprise malted cereal grains, an enzyme blend, and at least 50 wt% bread.

2. The method according to claim 1, further comprising filtering the liquid sugar solution to remove one or more of: proteins, colour, ionic components, or particulates according to a final specification.

3. The method according to claims 1 or 2, wherein the solid ingredients comprise at least 60 wt% bread, at least 70 wt% bread, at least 80 wt% bread, at least 90 wt% bread, or at least 95 wt% bread.

4. The method according to any of claims 1 to 3, wherein the solid ingredients comprise at least 5 wt%, at least 10 wt%, at least 20 wt%, at least 30 wt%, at least 40 wt%, or at least 50 wt% malted cereal grains.

5. The method according to any of claims 1 to 4, wherein the solid ingredients further comprise rice hulls.

6. The method according to any of claims 1 to 5, wherein the malted cereal grains are selected from one or more of malted barley, high diastatic power malted barley, malted wheat, malted maize, malted rice, malted oats, and malted barley grains.

7. The method according to any of claims 1 to 6, wherein ratio of water to solid ingredients in the mashing step is between 1:1 and 10:1, and optionally between 3.5:1 and 6:1.

8. The method according to any of claims 1 to 7, wherein the water is initially heated during the steeping step to about 40°C, and then heated up to about 80°C over a time period of about 30 to 180 minutes, or the water is initially heated to about 50°C, and then heated up to about 80°C over a time period of about 60 minutes.

9. The method according to any of claims 1 to 8, wherein the enzyme blend comprises a first enzyme group, a second enzyme group, a third enzyme group, and a fourth enzyme group.

10. The method according to claim 9, wherein: the first enzyme group comprises pullulanase, $\alpha$-amylase, cellulase, xylanase, protease, lipase; the second enzyme group comprises amyloglucosidase; the third enzyme group comprises xylanase and $\beta$-glucanase; and the fourth enzyme group comprises protease.

11. The method according to claims 9 or 10, wherein the enzyme blend comprises 50% of the first group, 30% of the second group, 10% of the third group, and 10% of the fourth group.

12. The method according to any of claims 1 to 11, wherein the enzyme blend dose is between 3.0 and 4.5 ml/kg dry matter, 3.5 and 4.0 ml/kg dry matter, or 3.7 and 3.8 ml/kg dry matter.

13. The method according to any of claims 1 to 12, wherein the pH of the mixture in the mashing step is between 4 and 6.5, optionally between 5 and 5.5.

14. A syrup prepared according to the method of any one of claims 1 to 13, wherein sugars of the syrup comprise at least 70 wt%, at least 75 wt%, at least 80 wt%, or at least 85 wt% fermentable sugars.

15. A beer manufactured using the syrup according to claim 14.

FIG. 1

Film Evaporation

Wort feed 101

Heat Supply 103

Vacuum Evacuation 105

Vacuum Waste 107

Stream condensate out 109

Concentrate 113

Concentrate recovery 111

Product out 115

# FIG. 2

Mash Vessel

FIG. 3

Kettle with External Wort Boiler

Probe 213

Steam in 301

Condensate
out 303

Wort in 305

Wort Out 307

Pump 309

FIG. 4

Mash Filter

Sparge water inlet 401

Adjustable for compression

Wort Out 403

Solid Waste
405

# FIG. 5

Six Roller Mill

inlet 501

Rollers 503

Screens 505

Collection
Hopper 505

FIG. 6

Process schematic

# FIG. 7

**700**

702 — Steep solid ingredients in water

704 — Form mixture comprising liquid sugar solution

706 — Extract liquid sugar solution from mixture

708 — Concentrate the liquid sugar solution

710 — Do solid ingredients contain at least 50 wt% bread?

Yes — No

712 — Syrup suitable for fermented beverage production

714 — Adjust solid ingredients composition

Europäisches
Patentamt

European
Patent Office

Office européen
des brevets

## EUROPEAN SEARCH REPORT

**Application Number**

EP 25 18 1586

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 003666 B4 (KANNE BROTTRUNK GMBH & CO BETR SGESELLSCHAFT KG [DE]) 23 February 2012 (2012-02-23) * paragraph [0021]; claims 1-15 * ----- | 1-25 | INV. C12C7/047 C12C5/00 C12C7/053 |
| X | DE 39 27 315 A1 (THURN & TAXIS BRAUEREI [DE]) 12 July 1990 (1990-07-12) * claims 1-9 * ----- | 1-25 | |
| X | DE 10 2021 114453 A1 (HILSENBECK CHRISTOPH [DE]; HILSENBECK HANS DIETER [DE]) 8 December 2022 (2022-12-08) * paragraphs [0011], [0034] - [0044]; claims 1-10; figure 1 * ----- | 1-25 | |
| X | DE 34 02 778 A1 (BATSCHEIDER LIEKEN MUEHLEN [DE]) 8 August 1985 (1985-08-08) * claims 1-10 * ----- | 1-20,23, 24 | |
| X | US 3 305 395 A (SCALLET BARRETT L ET AL) 21 February 1967 (1967-02-21) * claims 1-21 * ----- | 18-20, 23,24 | **TECHNICAL FIELDS SEARCHED (IPC)** C12C |

The present search report has been drawn up for all claims

| Place of search | Date of completion of the search | Examiner |
|---|---|---|
| The Hague | 9 February 2026 | van Klompenburg, Wim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 1586

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | | Publication date | Patent family member(s) | Publication date |
|---|---|---|---|---|
| DE 102009003666 | B4 | 23-02-2012 | NONE | |
| DE 3927315 | A1 | 12-07-1990 | NONE | |
| DE 102021114453 | A1 | 08-12-2022 | NONE | |
| DE 3402778 | A1 | 08-08-1985 | NONE | |
| US 3305395 | A | 21-02-1967 | NONE | |

EPO FORM P0459

For more details about this annex : see Official Journal of the European Patent Office, No. 12/82